# FASCICULE DE BREVET EUROPEEN

(11) **EP 3 349 975 B1**
(45) Date de publication et mention de la délivrance du brevet: **21.08.2019**
(21) Numéro de dépôt: 16775305.2
(22) Date de dépôt: 13.09.2016
(51) Int. Cl.: B29C 73/34

(54) **DISPOSITIF DE CHAUFFAGE D'UNE ZONE DONNÉE D'UNE PIÈCE**
VORRICHTUNG ZUM ERWÄRMEN EINES BEREICHS EINES TEILS
DEVICE FOR HEATING A GIVEN ZONE OF A PART

(30) Priorité: 14.09.2015 FR 1558565
(43) Date de publication de la demande: 25.07.2018
(73) Titulaire: Safran Aircraft Engines, 75015 Paris (FR)
(72) Inventeur: LAMOUCHE, Damien, 77550 Moissy Cramayel (FR); BOSSAN, Pierre Antoine, 77550 Moissy Cramayel (FR)
(74) Mandataire: Jolly, Christophe
(86) Numéro de dépôt international: PCT/FR2016/052301
(87) Numéro de publication internationale: WO 2017/046504

(56) Documents cités:
- FR-A1- 2 950 079
- US-A1- 2005 056 632

## Description

L'invention concerne un dispositif de chauffage d'une zone donnée d'une pièce, telle qu'une surface d'un carter de turbomachine.

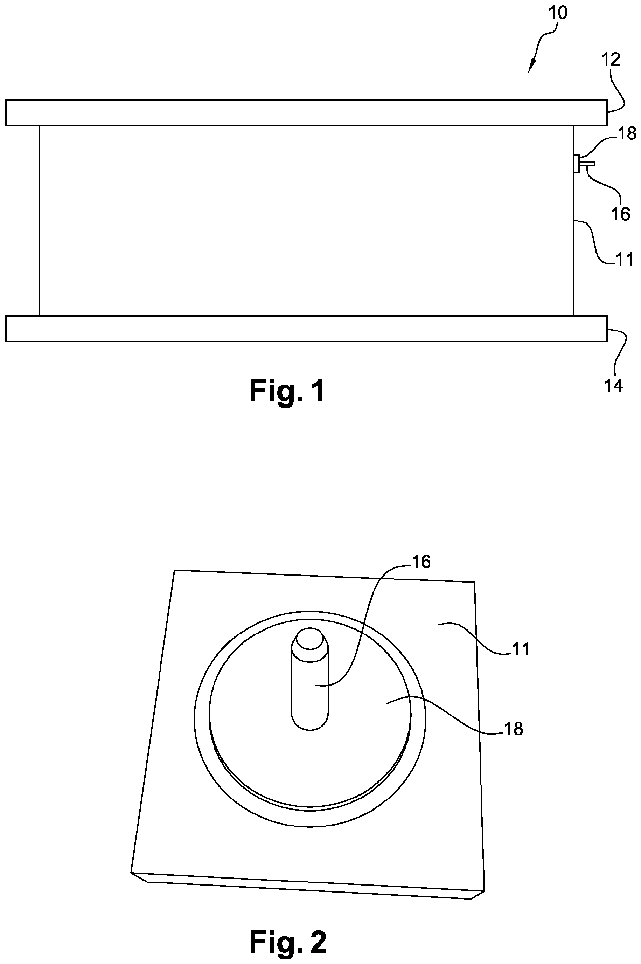

Classiquement, une turbomachine comprend un carter intermédiaire 10 agencé entre un compresseur basse pression et un compresseur haute pression. Un tel carter 10 comprend une paroi sensiblement cylindrique 11 s'étendant entre une bride amont 12 et une bride aval 14, ces brides 12, 14 servant à la fixation du carter intermédiaire sur des parties statoriques de la turbomachine (figures 1 et 2).

La surface externe de la paroi 11 du carter sert notamment à l'accrochage d'équipements, d'une enveloppe de protection thermique ou encore de conduits de passage de fluide. En particulier, pour fixer l'enveloppe de protection thermique, il est connu d'utiliser des tiges filetées 16 portées par une embase 18 en composite carbone, cette dernière étant fixée sur la surface externe de la paroi cylindrique 11 du carter 10 au moyen d'une colle thermodurcissable. Pour cela, le carter 10 doit être placé dans un four durant une période déterminée au préalable qui peut être de plusieurs heures, ce qui interrompt toutes les étapes de fabrication subséquentes nécessitant le carter. De plus, le déplacement d'un carter intermédiaire peut s'avérer délicat à réaliser dans le cas où celui-ci a un important diamètre, de l'ordre de un à deux mètres. De plus, certains équipements ne peuvent pas être placés dans un four du fait d'une taille trop importante.

Le document US2005/0056632 concerne un système de polymérisation d'un composite.

L'invention a notamment pour but d'apporter une solution simple, efficace et économique à ce problème.

A cet effet, elle propose un dispositif de confinement d'une zone donnée d'une pièce comprenant une première jupe rigide ouverte à une première extrémité qui est apte à venir s'appliquer autour de ladite zone donnée de la pièce et une seconde jupe souple et élastique ouverte à une même première extrémité que la première jupe et destinée à venir s'appliquer sur la pièce, la seconde jupe entourant à distance la première jupe rigide de manière à former un espace annulaire qui est relié à des moyens de mise en dépression de l'espace annulaire lorsque les premières extrémités de la première jupe et de la seconde jupe sont appliquées sur la pièce.

A la différence de la technique antérieure, l'invention permet d'appliquer un dispositif de confinement autour de la pièce pour ainsi venir chauffer localement la pièce à l'endroit où l'on souhaite effectuer un chauffage pour effectuer par exemple une opération de polymérisation d'une colle. On évite ainsi le chauffage de l'intégralité de la pièce.

La première jupe permet de réaliser un confinement de la pièce au niveau de la zone entourée par sa première extrémité appliquée sur la pièce. La première jupe et la seconde jupe définissent ensemble un espace annulaire qui est relié à des moyens de mise en dépression de l'espace annulaire, permettant ainsi un maintien du dispositif sur la pièce.

L'utilisation d'une première jupe rigide permet de maintenir un volume fixe non déformable à l'intérieur de celle-ci, autorisant le montage à l'intérieur de la première jupe d'un organe d'accrochage sur la pièce. L'utilisation d'une seconde jupe souple et élastique permet de garantir le maintien du dispositif de chauffage sur la pièce à chauffer, en particulier lorsque le dispositif ne repose pas sur la pièce à chauffer.

Le dispositif selon l'invention permet en cas de casse d'un organe de fixation sur le carter de le réparer plus rapidement, sans effectuer un démontage complexe du moteur. Une réparation sous l'aile pourrait aussi être envisagée, évitant ainsi une dépose du moteur très coûteuse.

On notera que dans la demande, le terme « annulaire » utilisé pour définir l'espace de séparation des première et seconde jupes doit s'interpréter comme étant un espace qui n'a pas nécessairement une forme circulaire mais qui est un espace s'étendant entre les première et seconde jupes sur 360°.

Selon une autre caractéristique de l'invention, la première jupe rigide est réalisée dans un matériau résistif et est reliée à des moyens d'alimentation électrique. Le matériau est par exemple thermodurcissable.

Selon encore une autre caractéristique de l'invention, la première jupe est recouverte d'une couche d'isolant thermique sur sa face orientée vers la seconde jupe, ce qui permet de confiner la chaleur à l'intérieur de la première jupe. La couche isolante peut être en matériau thermodur ou en matériau réfractaire.

Dans une réalisation de l'invention, les moyens de mise en dépression comprennent un conduit à effet venturi comportant un orifice d'aspiration relié fluidiquement audit espace annulaire, de manière à pouvoir appliquer une dépression à l'intérieur dudit espace annulaire de séparation entre la première jupe et la seconde jupe.

Un clapet de blocage peut être agencé à la jonction entre le conduit et l'entrée de l'espace annulaire afin de garantir un maintien du dispositif sur la pièce tout en ne nécessitant plus le fonctionnement des moyens de mise en dépression de l'espace annulaire après qu'une dépression a été établie dans l'espace annulaire.

Ladite première extrémité annulaire de la première jupe peut comprendre des moyens d'étanchéité tels qu'un joint.

Le dispositif comprend, de préférence, des moyens de mesure de la température à l'intérieur de la première jupe, tels qu'une sonde à thermocouple, afin de contrôler en temps réel la température à l'intérieur de la première jupe.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1, déjà décrite précédemment, est une représentation schématique d'un carter intermédiaire de turbomachine d'un type connu ;
- la figure 2, également décrite précédemment, est une vue schématique en perspective d'un organe d'attache monté sur la surface externe du carter de la figure 1 ;
- la figure 3 est une vue schématique en coupe du dispositif de chauffage selon l'invention.

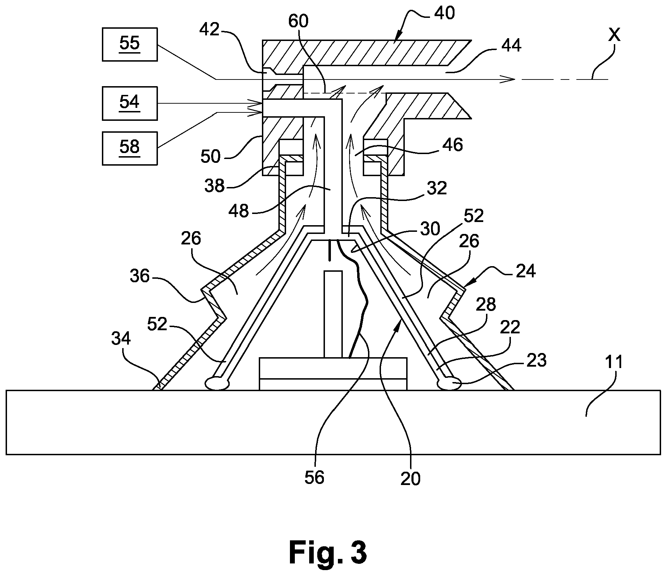

On se réfère dans la suite de la description à la figure 3 qui représente un dispositif de confinement selon l'invention comprenant une première enceinte ou jupe 20 comprenant une première extrémité 22 appliquée sur la surface externe de la paroi cylindrique 11 du carter 10 décrit en référence à la figure 1. La première jupe 20 est réalisée dans un matériau rigide de manière à ce que celle-ci définisse intérieurement un volume non déformable à l'intérieur duquel une embase 18 peut être reçue, l'embase 18 étant appliquée sur le carter 10 et portant une tige filetée 16 s'étendant sensiblement perpendiculairement à la surface externe 11 du carter 10. La première jupe 20 rigide est entourée extérieurement d'une seconde jupe 24 souple et élastique. Cette seconde jupe 24 entoure à distance la première jupe 20 de manière à définir un espace annulaire 26 entre la première jupe 20 et la seconde jupe 24.

Plus précisément, la première jupe 20 comprend une ouverture au niveau de sa première extrémité annulaire 22 qui porte des moyens d'étanchéité tels qu'un joint annulaire 23 de manière à réaliser un appui à étanchéité entre cette première extrémité 22 et la surface externe 11 du carter 10 sur laquelle la première extrémité 22 de la première jupe 20 est appliquée. Dans la réalisation particulière représentée en figure 3, la première jupe 20 comprend une paroi tronconique 28 à section s'évasant en direction de la première extrémité de la jupe 20 et est raccordée au niveau de sa deuxième extrémité 30 opposée à une seconde paroi 32 sensiblement plane. Ainsi en position d'appui sur la pièce 10, la première jupe 20 forme avec la zone de la pièce entourée par la première jupe 20, une enceinte close. Bien entendu, la forme spécifique de la première jupe 20 est ici dictée par la forme de l'embase 18 et de la tige 16 et la position dans laquelle on souhaite fixer cette embase sur le carter 10. Ainsi, la première jupe 20 peut prendre toute forme adaptée à un engagement autour d'une zone donnée à chauffer d'une pièce.

La seconde jupe 24 comprend également une ouverture à une première extrémité annulaire 34 venant en appui sur la surface externe de la paroi cylindrique 11 du carter 10. Cette seconde jupe 24 présente une forme générale tronconique s'évasant en direction de la première extrémité 34 et comporte un ou plusieurs soufflets ou renflements convexes 36 permettant de faciliter la déformation élastique de sa paroi. La seconde jupe 24 comprend une seconde extrémité 38 opposée à la première extrémité 34 et solidaire d'un conduit 40.

Le dispositif comprend des moyens de mise en dépression de l'espace annulaire. Dans la réalisation représentée en figure 3, ces moyens comprennent une pompe à vide comportant un conduit 40 à effet venturi d'axe X comportant à une extrémité amont un orifice d'entrée d'air 42 de petit diamètre et à une extrémité aval un orifice de sortie d'air 44 de plus grand diamètre. Le conduit 40 comprend un orifice latéral 46 d'aspiration d'air communiquant d'un côté avec l'intérieur du conduit 40 et de l'autre côté avec l'espace annulaire 26 de séparation de la première jupe 20 et de la seconde jupe 24.

Comme cela est visible sur la figure 2, la paroi plane 32 de la première jupe 20 est reliée à un bras 48 de support traversant avec jeu l'orifice d'aspiration 46 et engagé dans un support solidaire 50 du conduit 40. La paroi tronconique 28 de la première jupe 20 est recouverte d'une couche 52 d'isolation thermique sur sa face orientée vers la seconde jupe 24, ce qui permet de confiner la chaleur du rayonnement thermique émis par la première jupe 20 à l'intérieur de celle-ci. La couche isolante 52 peut être en thermodur ou en matériau réfractaire.

Dans une réalisation de l'invention, la première jupe 20 et le bras 48 de support sont réalisés dans un matériau résistif et sont reliés à des moyens d'alimentation électrique 54. Le matériau résistif est par exemple réalisé dans un matériau thermodurcissable.

La seconde extrémité 38 de la seconde jupe 24 est fixée dans le support 50 qui entoure l'orifice 46 d'aspiration d'air.

En fonctionnement, l'envoi d'un flux d'air sous pression 55 par l'orifice d'entrée 42 induit une aspiration de l'air de l'espace annulaire 26 lequel sort par l'orifice de sortie 44 du conduit 40. La diminution de la pression dans l'espace annulaire 26 permet ainsi une application à étanchéité de la première jupe 20 et de la seconde jupe 24 sur le carter 10.

Le dispositif comprend également des moyens de mesure de la température à l'intérieur de la première jupe. Ces moyens comprennent par exemple une sonde à thermocouple 56 agencée à l'intérieur de la première jupe 20 et reliée extérieurement à des moyens de traitement et d'affichage de la température 58. Le dispositif peut également comprendre un clapet anti-retour 60 agencé, par exemple, au niveau de l'orifice d'aspiration de manière à maintenir la dépression dans l'espace annulaire 26 lorsque celui-ci est établi par la pompe à vide.

## Revendications

1. Dispositif de confinement d'une zone donnée d'une pièce (10) comprenant une première jupe (20) rigide ouverte à une première extrémité (22) qui est apte à venir s'appliquer autour de ladite zone donnée de la pièce (10) et une seconde jupe (24) souple et élastique ouverte à une même première extrémité (34) que la première jupe (20) et destinée à venir s'appliquer sur la pièce, la seconde jupe (24) entourant à distance la première jupe rigide (20) de manière à former un espace annulaire (26) qui est relié à des moyens de mise en dépression de l'espace annulaire lorsque les premières extrémités de la première jupe et de la seconde jupe sont appliquées sur la pièce.

2. Dispositif selon la revendication 1, dans lequel la première jupe (20) rigide est réalisée dans un matériau résistif et reliée à des moyens d'alimentation électrique.

3. Dispositif selon la revendication 1 ou 2, dans lequel la première jupe (20) est recouverte d'une couche (52) d'isolant thermique sur sa face orientée vers la seconde jupe (24).

4. Dispositif selon l'une des revendications 1 à 3, dans lequel les moyens de mise en dépression comprennent un conduit (40) à effet venturi relié fluidiquement audit espace annulaire (26).

5. Dispositif selon la revendication 4, dans lequel un clapet (60) de blocage est agencé à la jonction entre le conduit (40) et l'entrée dudit espace annulaire (26).

6. Dispositif selon l'une des revendications précédentes, dans lequel ladite première extrémité annulaire (22) de la première jupe (20) porte des moyens d'étanchéité (23) tel qu'un joint.

7. Dispositif selon l'une des revendications précédentes, comprenant des moyens de mesure de la température à l'intérieur de la première jupe (20), tel qu'une sonde à thermocouple (56).

## Patentansprüche

1. Vorrichtung zum Einschließen eines bestimmten Bereichs eines Teils (10), welche eine erste steife Schürze (20) umfasst, die an einem ersten Ende (22) offen ist, die in der Lage ist, sich um den bestimmten Bereich des Teils (10) zu legen, und eine zweite nachgiebige und elastische Schürze (24), die am gleichen ersten Ende (34) wie die erste Schürze (20) offen ist und dazu bestimmt ist, sich an das Teil anzulegen, wobei die zweite Schürze (24) die erste steife Schürze (20) beabstandet umgibt, so dass ein ringförmiger Bereich (26) gebildet wird, der mit Mitteln zur Bildung eines Unterdrucks im ringförmigen Bereich verbunden ist, wenn die ersten Enden der ersten Schürze und der zweiten Schürze an das Teil angelegt werden.

2. Vorrichtung nach Anspruch 1, in der die erste steife Schürze (20) aus einem widerstandsfähigen Material hergestellt und mit Stromversorgungsmitteln verbunden ist.

3. Vorrichtung nach Anspruch 1 oder 2, in der die erste Schürze (20) mit einer Lage (52) Wärmedämmstoff an der zur zweiten Schürze (24) gerichteten Seite bedeckt ist.

4. Vorrichtung nach einem der Ansprüche 1 bis 3, in der die Mittel zur Erzeugung eines Unterdrucks eine Venturileitung (40) umfassen, die fluidisch mit dem ringförmigen Bereich (26) verbunden ist.

5. Vorrichtung nach Anspruch 4, in der ein Rückschlagsperrventil (60) an der Verbindung zwischen der Leitung (40) und dem Eingang des besagten ringförmigen Bereichs (26) angeordnet ist.

6. Vorrichtung nach einem der vorhergehenden Ansprüche, in der das erste ringförmige Ende (22) der ersten Schürze (20) Abdichtungsmittel (23), wie zum Beispiel eine Dichtung, trägt.

7. Vorrichtung nach einem der vorhergehenden Ansprüche, die im Innern der ersten Schürze (20) Mittel zur Messung der Temperatur, wie zum Beispiel ein Thermoelement (56), umfasst.

## Claims

1. A device for confining a given zone of a part (10) comprising a first rigid skirt (20) open on a first end (22) which can be applied around said given zone of the part (10) and a second flexible and elastic skirt (24) open on the same first end (34) as the first skirt (20) and designed to be applied to the part, the second skirt (24) surrounding the first rigid skirt (20) at a distance in order to form an annular space (26) which is connected to means for creating a vacuum in the annular space when the first ends of the first skirt and the second skirt are applied to the part.

2. A device according to claim 1, wherein the first rigid skirt (20) is made of a resistive material and connected to electric power supply means.

3. A device according to claim 1 or 2, wherein the first skirt (20) is coated with a layer (52) of heat-insulating material on its face turned towards the second skirt (24).

4. A device according to one of claims 1 to 3, wherein the means for creating a vacuum comprise a venturi-effect duct (40) fluidly connected to said annular space (26).

5. A device according to claim 4, wherein a locking valve (60) is arranged at the connection of the duct (40) and the inlet of said annular space (26).

6. A device according to one of the preceding claims, wherein said first annular end (22) of the first skirt (20) carries sealing means (23) such as a gasket.

7. A device according to one of the preceding claims, comprising means for measuring the temperature inside the first skirt (20), such as a thermocouple probe (56).
